# EUROPEAN PATENT APPLICATION

(11) **EP 4 035 886 A1**
(43) Date of publication of application: **03.08.2022**
(21) Application number: 20868509.9
(22) Date of filing: 25.09.2020
(51) Int. Cl.: B32B 5/02, B32B 21/10, B32B 9/00, B32B 9/04, B32B 37/10, B32B 38/00

(54) **INTERIOR MATERIAL FOR VEHICLE AND METHOD FOR MANUFACTURING SAME**

(30) Priority: 25.09.2019 KR 20190118052; 22.09.2020 KR 20200122577
(71) Applicant: LG Hausys, Ltd., Seoul 04637 (KR)
(72) Inventor: LEE, Chang Gyun, Seoul 07796 (KR); CHOI, Yeon Wook, Seoul 07796 (KR); KANG, Dae In, Seoul 07796 (KR); SON, Jung Il, Seoul 07796 (KR); LEE, Hyeon Seok, Seoul 07796 (KR)
(74) Representative: Petraz, Gilberto Luigi
(86) International application number: PCT/KR2020/013125
(87) International publication number: WO 2021/060931

(57) **Abstract**

Proposed is an interior material for a vehicle including a real material layer, and a decorative part inserted into the real material layer to be exposed a portion thereof through the surface of the real material layer, wherein the real material layer may include one selected from a surface material layer, a nonwoven layer, and a combination thereof.

## Description

### Technical Field

The present disclosure relates to an interior material for a vehicle and a method for manufacturing the same.

### Background Art

In general, resin molded parts are used as interior and exterior materials for automobiles, such as console boxes and panels around instrument clusters. Resin molded products are also widely used in home appliances such as cases and covers of electric rice cookers.

In particular, various control units and convenience devices are installed on a dashboard, an audio deck, a gear shifter, an airbag, a door lock, a window control unit installed around the driver's seat and front passenger's seat inside a vehicle. In the gap between the exterior and interior materials of various control and convenience devices, finishing panels are installed as finish interior materials, and these interior materials are becoming an important factor in defining the look of a vehicle's interior.

As such, the interior materials for automobiles have a significant effect on the aesthetics of the interior of the automobile, and thus, the aesthetic requirements for the look are gradually increasing in the current trend of individualization of automobiles.

Accordingly, in recent years, there has been an increasing demand for interior materials for automobiles to obtain external refinement and high-quality texture.

### Disclosure

### Technical Problem

The present disclosure has been made keeping in mind the problems occurring in the related art. An objective of the present disclosure is to provide an interior material for a vehicle, in which heterogeneous materials such as metal or fabric are inlayed on the real material surface in real material automobile interior materials such as real wood and real carbon.

In addition, an objective of the present disclosure is to provide a method for manufacturing an interior material for a vehicle, in which a different material such as metal or fabric is inlayed on a real material.

Another objective of the present disclosure is to provide a method for manufacturing an interior material for a vehicle, which can prevent deformation such as shrinkage or expansion in the surface material layer in the process of manufacturing the interior material for a vehicle.

Further, an objective of the present disclosure is to provide a method of manufacturing a luxurious interior material for a vehicle, in which the pattern of the decorative part can be exposed as it is on the surface material layer.

### Technical Solution

An interior material for a vehicle according to an aspect of the present disclosure includes: a real material layer; and a decorative part inserted into the real material layer to expose a part thereof through a surface of the real material layer, wherein the real material layer may include one selected from a surface material layer, a nonwoven layer, and a combination thereof.

The real material layer may further include a decorative material sheet at a bottom thereof.

The surface material layer may be a veneer sheet or a carbon sheet.

The nonwoven layer may include one selected from a nonwoven sheet, a glue sheet, and a combination thereof.

The decorative part may include at least one selected from aluminum, copper, stainless steel, steel, and fabric materials.

The thickness of the interior material for a vehicle may be 0.6 to 2.2 mm.

A method for manufacturing an interior material for a vehicle according to an aspect of the present disclosure may include: providing a surface material layer, a decorative part, and a nonwoven layer; bonding the nonwoven layer, the decorative part, and the surface material layer in order by a flat plate press; sanding the surface material layer so that at least a portion of the decorative part is exposed; and molding the sanded nonwoven layer, the decorative part, and the surface material layer into a predetermined shape.

In the bonding, a protective member may be disposed on at least one of an outer surface of the surface material layer and the outer surface of the nonwoven layer.

The protective member may be a silicone pad or a paper board.

The nonwoven layer may be impregnated with an adhesive.

In the sanding, the thickness of the surface material layer may be reduced to 40 to 90% compared to the thickness of the surface material layer before sanding.

After sanding the surface material layer and before the molding, the bonded surface material layer, decorative part, and nonwoven layer may be cut to a predetermined size.

The method for manufacturing an interior material for a vehicle according to an aspect of the present disclosure may further include: injection molding of a support part located under the nonwoven layer after the molding.

In the injection molding, an adhesive-impregnated nonwoven layer may be additionally attached under the nonwoven layer.

A method for manufacturing an interior material for a vehicle according to an aspect of the present disclosure may include: forming an inlay part by etching or raker cutting on a real material layer in which a surface material layer and a nonwoven layer are stacked in order; inserting a decorative part into the inlay part; and sanding a protruding portion of the decorative part.

The thickness of the inlay part may be equal to or smaller than the thickness of the real material layer.

A method for manufacturing an interior material for a vehicle may include: removing an etched part except for a decorative part from a surface of a decorative material sheet by etching or laser cutting; laminating a surface material layer on an upper surface of the decorative material sheet prior to performing compression with a press; and exposing the decorative part by sanding the surface of the surface material layer.

A method for manufacturing an interior material for a vehicle may include: laminating a decorative part on an upper surface of a real material layer prior to performing compression with a press; and sanding the real material layer from which the decorative part protrudes.

The real material layer may include one selected from a surface material layer, a nonwoven layer, and a combination thereof.

The surface material layer may be a veneer sheet or a carbon sheet.

The decorative part may include at least one selected from aluminum, copper, stainless steel, steel, and fabric materials.

### Advantageous Effects

As described above, the method for manufacturing an interior material for a vehicle according to an aspect of the present disclosure can prevent deformation such as shrinkage or expansion in the surface material layer during the manufacturing process.

In addition, the interior material for a vehicle manufactured by the method for manufacturing an interior material for a vehicle according to an aspect of the present disclosure can be used as a luxurious decoration by exposing a specific pattern of the decorative part on the surface of the surface material layer as it is.

Moreover, in the case of the interior material for a vehicle manufactured by the method for manufacturing an interior material for a vehicle according to an aspect of the present disclosure, by utilizing inlays in conventional real wood or real carbon products, it is possible to provide more sophisticated, luxurious, and varied aesthetics.

Further, in the case of the interior material for a vehicle manufactured by the method for manufacturing an interior material for a vehicle according to an aspect of the present disclosure, existing molds and jigs and fixtures can be applied as they are, so no extra cost is required to build facilities, making it economical and efficient.

### Description of Drawings

FIGS. 1a to 1c are views showing a process of manufacturing an interior material for a vehicle according to a first embodiment of the present disclosure;
FIGS. 2a to 2d are views showing another process of manufacturing the interior material for a vehicle according to the first embodiment of the present disclosure;
FIGS. 3a to 3d are views showing yet another process of manufacturing the interior material for a vehicle according to the first embodiment of the present disclosure;
FIGS. 4a to 4c are views showing yet another process of manufacturing the interior material for a vehicle according to the first embodiment of the present disclosure;
FIGS. 5a to 5e are views showing yet another process of manufacturing an interior material for a vehicle according to a second embodiment of the present disclosure;
FIG. 6 is a flowchart illustrating a process of manufacturing the interior material for a vehicle according to the first embodiment of the present disclosure;
FIGS. 7 to 13 are views for explaining a process of manufacturing the interior material for a vehicle according to the first embodiment of the present disclosure;
FIGS. 14 to 16 are views for explaining another process of manufacturing the interior material for a vehicle according to the first embodiment of the present disclosure;
FIG. 17 is a photograph of an interior material for a vehicle in which the surface of a surface material layer is sanded so that a decorative part is exposed;
FIG. 18 is a photograph taken of an interior material for a vehicle laser cut before molding into a predetermined shape; and
FIG. 19 is a photograph taken of an interior material for a vehicle molded by a press.

### Mode for Invention

While the present disclosure may be modified in various ways and take on various alternative forms, specific embodiments thereof are shown and described in detail below. However, it should be understood that there is no intent to limit the present disclosure to the particular forms disclosed, but on the contrary, the present disclosure covers all modifications, equivalents, and alternatives falling within the spirit and scope of the present disclosure.

The terminology used herein to describe embodiments of the present disclosure is not intended to limit the scope of the present disclosure. The singular expression includes the plural expression unless the context clearly dictates otherwise. It should be further understood that the terms "comprise", "include", and/or "have", when used herein, specify the presence of stated features, numbers, steps, operations, elements, components, and/or groups thereof but do not preclude the presence or addition of one or more other features, numbers, steps, operations, elements, components, and/or groups thereof.

Hereinafter, preferred embodiments of the present disclosure will be described in detail with reference to the accompanying drawings. In this case, it should be noted that in the accompanying drawings, the same components are denoted by the same reference numerals as much as possible. In addition, detailed descriptions of well-known functions and configurations that may obscure the gist of the present disclosure will be omitted. For the same reason, some components are exaggerated, omitted, or schematically illustrated in the accompanying drawings.

Hereinafter, an interior material for a vehicle according to a first embodiment of the present disclosure will be described.

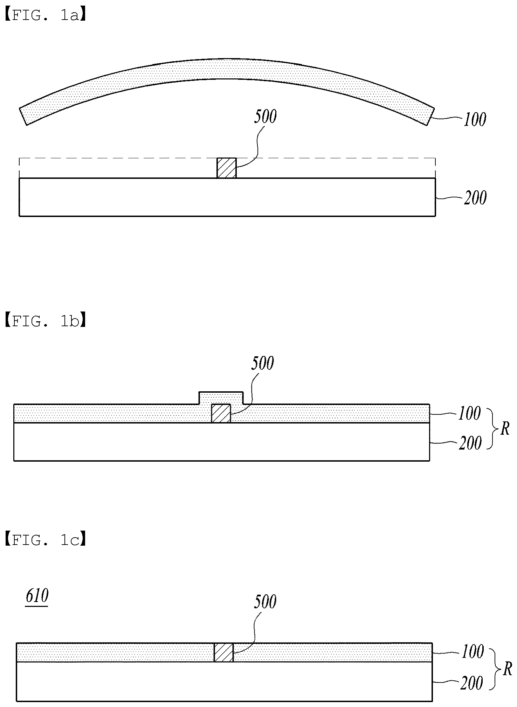

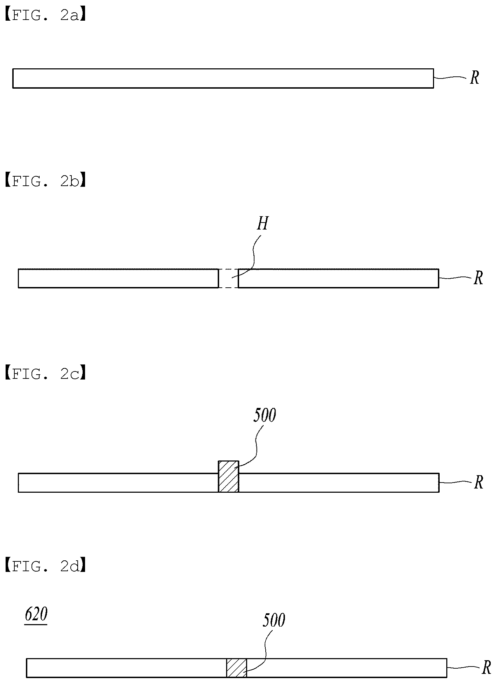

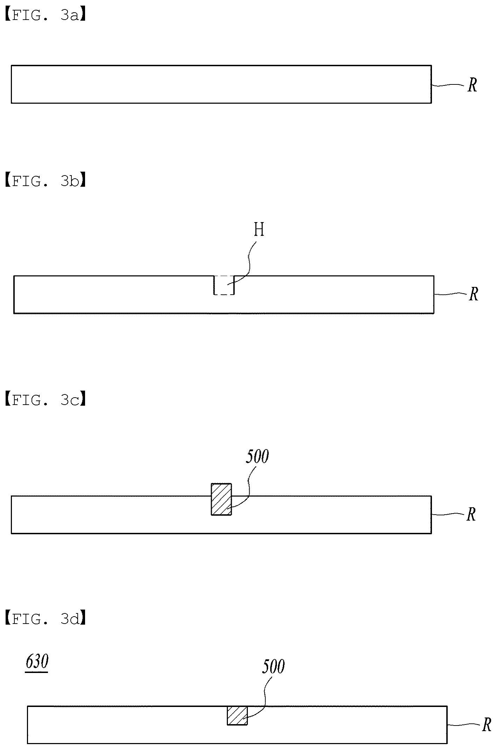

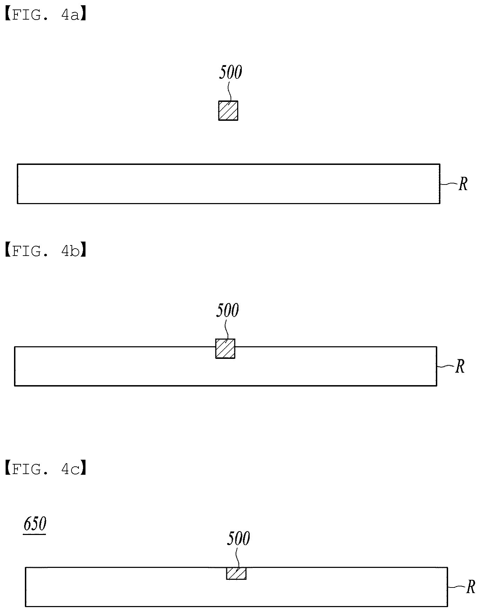

FIGS. 1a to 1c are views showing a process of manufacturing an interior material for a vehicle according to a first embodiment of the present disclosure; FIGS. 2a to 2d are views showing another process of manufacturing the interior material for a vehicle according to the first embodiment of the present disclosure; FIGS. 3a to 3d are views showing yet another process of manufacturing the interior material for a vehicle according to the first embodiment of the present disclosure; and FIGS. 4a to 4c are views showing yet another process of manufacturing the interior material for a vehicle according to the first embodiment of the present disclosure.

Referring to FIGS. 1 to 4, the interior material for a vehicle according to the first embodiment of the present disclosure may include a real material layer R and a decorative part 500. According to the embodiment, the decorative part 500 may be exposed on the surface of the real material layer R. Thereby, it is possible to implement various textures, senses of depth and design in the interior material for a vehicle, and there is an effect of further enhancing the sense of quality of the real interior materials.

The real material layer R may include one selected from a surface material layer 100, a nonwoven layer 200, and a combination thereof. More specifically, the real material layer R may include only the surface material layer 100. Alternatively, the real material layer R may include the surface material layer 100 and the nonwoven layer 200.

The surface material layer 100 may be a veneer sheet or a carbon sheet. By including veneer or carbon sheet, natural patterns may be maximized and a sense of depth may be realized, and it is possible to meet eco-friendly trends and show a luxurious appearance.

For example, the surface material layer 100 is a layer made of actual wood, and may be manufactured by thinly cutting the wood. The surface material layer 100 may be a veneer sheet made of thin natural wood. These veneers may be applied to luxurious decorative materials due to the unique texture and pattern of the veneer.

According to the embodiment, the decorative part 500 may be partially exposed on the surface of the real material layer R. Meanwhile, the decorative part 500 may not be exposed on the lower surface of the real material layer R, or some or all of the decorative part 500 may be exposed.

Here, as shown in FIG. 1c, the decorative part 500 may be included only in the surface material layer 100. Alternatively, the decorative part 500 may be included in the surface material layer 100 and the nonwoven layer 200. That is, the decorative part 500 may extend through the surface material layer 100 to the nonwoven layer 200.

The decorative part 500 is positioned under the surface material layer 100, and the decorative part 500 may be exposed from the surface material layer 100 by a sanding operation or the like.

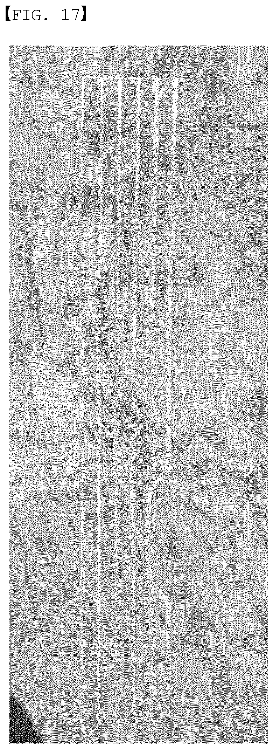

As the decorative part 500 is exposed from the surface material layer 100, the decorative part 500 may convey the feeling that the decorative part 500 is embedded in the surface material layer 100 or that a metal thin film is attached to the surface material layer 100 (see FIGS. 17 to 19). Since the decorative part 500 takes on a particular shape on the surface of the surface material layer 100, it may be used as a luxurious decoration by a combination of wood and metal.

The decorative part 500 may include at least one selected from metal materials such as aluminum, copper, stainless steel (SUS), and steel and fabric materials.

When processes such as etching or laser cutting are undertaken, any fabric material including general cloth or fabric may be selected and used without limitation, but a fabric with high strength may be selected and used according to the characteristics of the manufacturing method. In this case, the strength of the fabric is preferably as strong as bamboo and includes hard fibers.

By applying a material different from the surface material layer 100 of the real material layer to the decorative part 500, that is, by mixing different materials such as wood and metal, carbon and metal, wood and fabric, or carbon and fabric, various textures, sense of depths, and designs may be implemented in the interior material of the vehicle, further enhancing the sense of quality of car interior material made of real materials.

According to the embodiment, the decorative part 500 may represent a simple shape such as a straight line, a circle, a square, or a triangle, or a complex shape such as a specific pattern.

At least one of the horizontal and vertical lengths of the decorative part 500 is smaller than the length of at least any one of the horizontal and vertical lengths of the real material layer R. That is, the decorative part 500 may be included in the real material layer R in the form of a strip.

Meanwhile, the thickness of the decorative part 500 may be the same as or smaller than the thickness of the surface material layer 100 before sanding. If the thickness of the decorative part 500 is greater than the thickness of the surface material layer 100, when the decorative part 500 is bonded to the lower portion of the surface material layer 100, the protrusion height of the decorative part 500 increases, thereby increasing the amount of the decorative part 500 to be removed in the sanding process of the surface material layer 100. Accordingly, it may take a lot of time to remove the decorative part 500 in the sanding process, and thus taking a rather long time to complete the interior material for the vehicle according to the present embodiment.

The nonwoven layer 200 may be formed of a nonwoven layer impregnated with a dedicated adhesive. Here, the adhesive may be composed of one selected from the group consisting of polyvinyl acetate, phenol, melamine, urea, polyurethane, polyamide, ethylene vinyl acetate epoxy, polyester, polyvinyl alcohol, acrylonitrile butadiene rubber, styrene butadiene rubber, alkyd, acetylcellulose, and nitrocellulose.

The nonwoven layer 200 may be formed from one or more compositions selected from the group consisting of glass fiber, carbon fiber, polyester fiber, polyamide fiber, polyurethane fiber, acrylic fiber, polyolefin fiber, polyethylene terephthalate fiber, cellulose fiber and pulp.

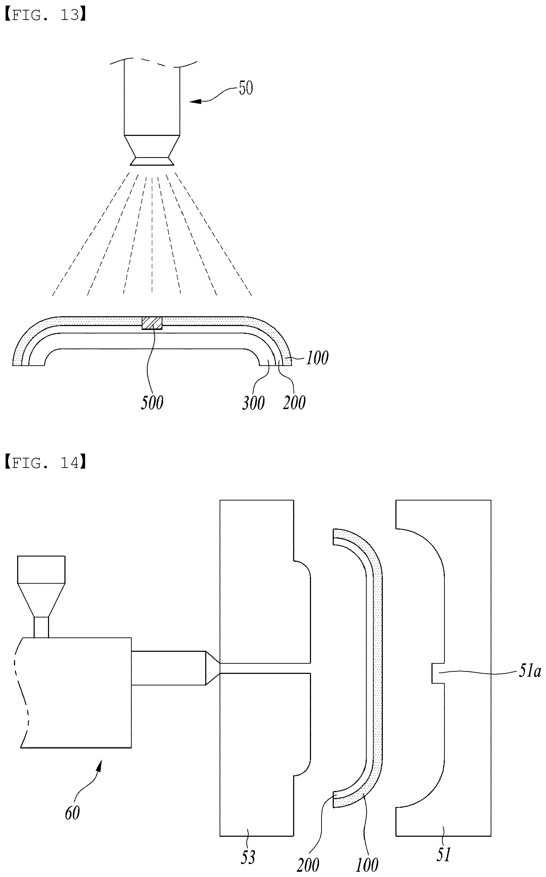

Meanwhile, a support part 300 (see FIG. 13) may be positioned under the real material layer R. The support part 300 may be formed on the rear surface of the surface material layer 100 and the nonwoven layer 200 while the injection molding material injected into the rear surface of the real material layer R is cured. The support part 300 fixes the surface material layer 100 to a specific object while supporting the surface material layer 100 and the nonwoven layer 200. For example, the support part 300 may easily fix the surface material layer 100 to the interior of the vehicle. At this time, the support part 300 may have a thickness of 3.3 to 3.7 mm, but is not limited within the above range.

The thickness of the interior material for a vehicle of the present disclosure may be 0.6 to 2.2 mm except for the support part 300. This is a thickness after compression by a wood press, and is not limited within the above range and may be formed in various thicknesses.

The interior material for a vehicle of the present disclosure may further include a coating layer on the top. The coating layer may be formed through PUR casting, and may have a thickness of 0.7 to 1.0 mm, but is not limited within the above range.

Hereinafter, an interior material for a vehicle according to a second embodiment of the present disclosure will be described.

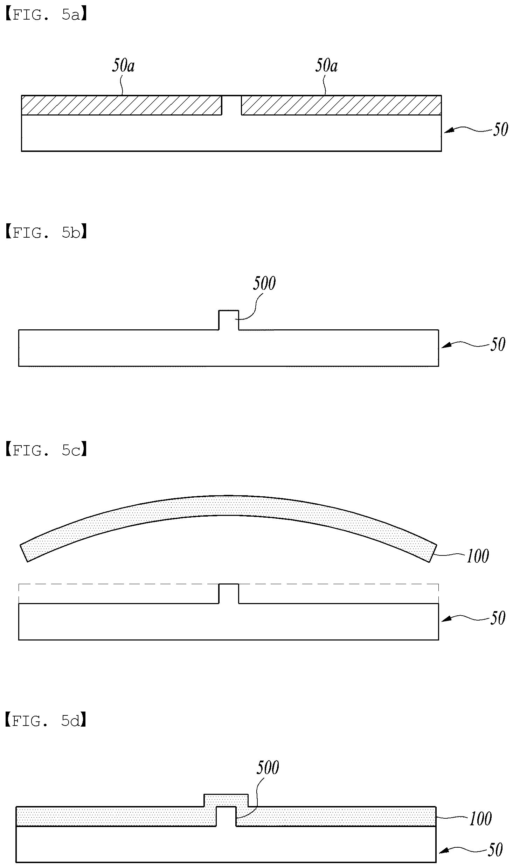

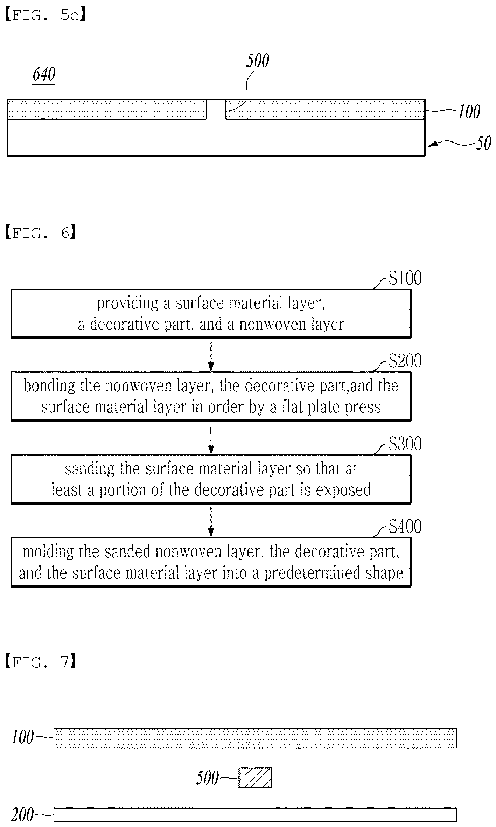

FIG. 5 is a view showing a process of manufacturing an interior material for a vehicle according to a second embodiment of the present disclosure.

Referring to FIG. 5, the interior material for a vehicle according to the second embodiment of the present disclosure includes a surface material layer 100, decorative material sheet 50, and a decorative part 500, and the decorative part 500 may be exposed on the surface of the surface material layer 100 in the same manner as the interior material for a vehicle according to the first embodiment described above. At this time, the decorative material sheet 50 is located under the surface material layer 100, the decorative part 500 is formed in a shape protruding from the surface of the decorative material sheet 50, and the decorative part 500 and the decorative material sheet 50 are formed integrally. According to the second embodiment, the decorative part 500 may be formed by etching or laser cutting a portion of the decorative material sheet 50. A detailed description thereof will be provided later.

Hereinafter, the interior material for a vehicle according to the first embodiment of the present disclosure will be described.

FIGS. 1a to 1c are views showing a process of manufacturing the interior material for a vehicle according to the first embodiment of the present disclosure.

According to the embodiment, as in FIG. 1a, the decorative part 500 is inserted between the nonwoven layer 200 having a thickness of 0.4 to 0.8 mm and the surface material layer 100 having a thickness of 0.4 to 0.6 mm so that the decorative part 500 and the surface material layer 100 are disposed on the nonwoven layer 200.

Then, as in the step of FIG. 1b, the nonwoven layer 200 and the surface material layer 100 are laminated by compression with a wood press (not shown), and between the nonwoven layer 200 and the surface material layer 100, the decorative part 500 is inserted. Accordingly, the nonwoven layer 200 and the surface material layer 100 are laminated to each other to form the real material layer R.

When the nonwoven layer 200 and the surface material layer 100 are compressed with the wood press (not shown), a portion of the surface material layer 100 is formed to protrude by the decorative part 500. At this time, as the decorative part 500 is pressed by the wood press, a portion of the decorative part 500 may be inserted into the nonwoven layer 200.

In the embodiment, as in the step of FIG. 1c, the decorative part 500 is formed by sanding the upper surface of the surface material layer 100 to expose the decorative part. An interior material 610 for a vehicle may be manufactured by flat molding so that the surface material layer 100 and the decorative part 500 have the same height. The thickness of the interior material for a vehicle is preferably 0.6 to 2.2 mm, but is not limited thereto.

Meanwhile, a support part 300 (see FIG. 13) may be positioned under the real material layer R. The support part 300 may be formed on the rear surface of the surface material layer 100 and the nonwoven layer 200 while the injection material injected into the rear surface of the real material layer R is cured. The support part 300 fixes the surface material layer 100 to a specific object while supporting the surface material layer 100 and the nonwoven layer 200.

Hereinafter, another method of manufacturing the interior material for a vehicle according to the first embodiment of the present disclosure will be described with reference to FIGS. 2a to 2d.

FIGS. 2a to 2d are views showing another process of manufacturing the interior material for a vehicle according to the first embodiment of the present disclosure.

According to the embodiment, as in the step of FIG. 2a, a real material layer R including a surface material layer 100 and a nonwoven layer 200 in this order is prepared.

Then, as in FIG. 2b, an inlay part H that penetrates the real material layer R is formed on the real material layer R by etching or raker cutting. The inlay part H may correspond to a space in which the decorative part 500 is inserted into the real material layer R. The width of the inlay part H may be the same as or smaller than the width of the decorative part 500. Thereby, the decorative part 500 may be fixed in the inlay part H in a press fit manner to the real material layer R.

An interior material for a vehicle 620 is manufactured by inserting the decorative part into the inlay part H as in the step of FIG. 2c, and sanding the portion where the decorative part protrudes above the real material layer R to form the decorative part 500 as in the step of FIG. 2d. The inlay part H may include a known bonding means such as an adhesive so that the decorative part may be attached, and the type of the bonding means is not limited.

Here, the thickness of the inlay part H may be the same as the thickness of the real material layer R. Accordingly, the decorative part 500 formed in the inlay part H also has the same thickness as the thickness of the real material layer R, and the decorative part 500 is exposed on portions of the top and bottom surfaces of the real material layer R. The thickness of the interior material for a vehicle is preferably 0.6 to 2.2 mm, but is not limited thereto.

Hereinafter, another method of manufacturing the interior material for a vehicle according to the first embodiment of the present disclosure will be described with reference to FIGS. 3a to 3d.

FIGS. 3a to 3d are views showing yet another process of manufacturing the interior material for a vehicle according to the first embodiment of the present disclosure.

According to the embodiment, as in the step of FIG. 3a, after preparing the real material layer R including the surface material layer 100 and the nonwoven layer 200 in order, the inlay part H is formed on the real material layer R by etching or raker cutting as in the step of FIG. 3b. Unlike in FIG. 2, the inlay part H of FIG. 3b may be formed in the form of a groove in the real material layer R without penetrating the real material layer.

An interior material for a vehicle 630 is manufactured by inserting the decorative part 500 into the inlay part H as in the step of FIG. 3c, and sanding the portion where the decorative part protrudes above the real material layer R to form the decorative part 500 as in the step of FIG. 3d. The inlay part may include a known bonding means such as an adhesive so that the decorative part may be attached, and the type of the bonding means is not limited.

Here, the thickness of the inlay part H may be smaller than the thickness of the real material layer R. Accordingly, the decorative part 500 formed in the inlay part H also has a thickness smaller than the thickness of the real material layer R. The real material layer R includes the surface material layer 100 and the nonwoven layer 200, and the decorative part 500 may be included only in the surface material layer 100, or may be included in the surface material layer 100 and the nonwoven layer 200. At this time, the decorative part 500 is exposed on a portion of the top surface of the real material layer R, and the decorative part 500 is not exposed on the bottom surface of the real material layer.

The thickness of the interior material for a vehicle of the embodiment is preferably 0.6 to 2.2 mm, and the thickness of the decorative part is preferably 0.4 to 0.6 mm, but is not limited thereto.

Hereinafter, another method of manufacturing the interior material for a vehicle according to the first embodiment of the present disclosure will be described with reference to FIGS. 4a to 4c.

FIGS. 4a to 4c are views showing yet another process of manufacturing the interior material for a vehicle according to the first embodiment of the present disclosure.

According to the embodiment, after laminating the decorative part on the upper surface of the real material layer R as in the step of FIG. 4a, compress with a wood press so that the decorative part is inserted into the real material layer by pressure as in the step of FIG. 4b. Unlike the manufacturing method described previously, in this manufacturing method, a separate inlay part H into which the decorative part 500 may be inserted is not formed in the real material layer R. That is, the decorative part 500 is pressed and inserted into the real material layer R without the inlay part H being formed.

Then, an interior material for a vehicle 650 is manufactured by sanding a portion of the decorative part 500 protruding above the real material layer R so that the surface heights of the real material layer and the decorative part are the same as in the step of FIG. 4c.

Hereinafter, a method of manufacturing an interior material for a vehicle according to the second embodiment of the present disclosure will be described with reference to FIGS. 5a to 5e.

FIGS. 5a to 5e are views showing a process of manufacturing the interior material for a vehicle according to the second embodiment of the present disclosure.

In this embodiment, the decorative material sheet 50 is prepared as in the step of FIG. 5a. The decorative material sheet 50 includes the decorative part 500 and an etched part 50a. In this embodiment, the decorative part 500 is formed on the decorative material sheet 50 by removing a portion of the upper part of the decorative material sheet 50, that is, the etched part 50a.

More specifically, the etched part 50a except for the decorative part 500 is removed by etching or laser cutting as in the step of 5b.

As in the step of FIG. 5c, after the etched part 50a is removed, the surface material layer 100 is laminated on the upper surface of the decorative material sheet 50 and compressed with a wood press.

Thereby, a laminate of the surface material layer 100 and the decorative material sheet 50 is formed as shown in FIG. 5D. Here, a portion of the surface material layer 100 located on the decorative part 500 is formed to protrude.

As in the step of FIG. 5e, an interior material for a vehicle 640 is manufactured by sanding the upper surface of the surface material layer 100 to expose the decorative part 500, and flat molding.

The thickness of the interior material for a vehicle is preferably 0.6 to 2.2 mm, and the thickness of the surface material layer is preferably 0.4 to 0.6 mm, but is not limited thereto.

A method of manufacturing an interior material for a vehicle of the present disclosure may further include: insert molding in an injection mold; milling using a milling jig; and coloring. If necessary, spraying a polyurethane (PU) or casting a polyurethane reactive (PUR) may also be included.

The present disclosure is very economical in that there is no need to build a new facility because the existing real material automobile interior manufacturing molds and tools may be applied as it is. Specifically, the existing mold equipment may be used as it is for wood press, insert injection, and PUR casting. In addition, existing jigs and fixtures such as material preparation jigs, milling jigs, and inspection tools may be used as they are.

Hereinafter, a method of manufacturing an interior material for a vehicle according to the first embodiment of the present disclosure shown in FIG. 1 will be described with reference to FIGS. 6 to 13.

FIG. 6 is a flowchart illustrating a process of manufacturing the interior material for a vehicle according to the first embodiment of the present disclosure; and FIGS. 7 to 13 are views for explaining a process of manufacturing the interior material for a vehicle according to the first embodiment of the present disclosure.

Referring to FIGS. 6 to 13, a method of manufacturing an interior material for a vehicle according to the first embodiment of the present disclosure may include: providing S100 a surface material layer 100, a decorative part 500, and a nonwoven layer 200; bonding S200 the surface material layer 100, the decorative part 500, and the nonwoven layer 200; sanding S300 the surface material layer 100; and molding S400 the surface material layer 100, the decorative part 500, and the nonwoven layer 200 into a predetermined shape.

According to the embodiment, before molding into a predetermined shape, a process of sanding the surface of the surface material layer 100 to a predetermined thickness so that the decorative part 500 is exposed is conducted after the bonded surface material layer 100, the decorative part 500, and the nonwoven layer 200 are flatly spread with a flat plate press 10. As described, by sanding the surface material layer 100 to a predetermined thickness, it is possible to prevent the surface material layer 100 from being deformed during the molding process. Moreover, the decorative part 500 is exposed in a specific pattern on the surface of the surface material layer 100, and can be used as a luxurious decoration part by a combination of wood and metal.

Referring to FIG. 7, the surface material layer 100 is a layer made of actual wood, and may be manufactured by thinly cutting the wood. The surface material layer 100 may be a veneer made of thin natural wood. These veneers may be applied to luxurious decorative parts due to the unique texture and pattern.

The decorative part 500 is positioned under the surface material layer 100, and the decorative part 500 may be exposed from the surface material layer 100 by a sanding operation to be described later.

As the decorative part 500 is exposed from the surface material layer 100, the decorative part 500 may convey the feeling that the decorative part 500 is embedded in the surface material layer 100 or that a metal thin film is attached to the surface material layer 100 (see FIGS. 17 to 19). Since the decorative part 500 takes on a particular shape on the surface of the surface material layer 100, it may be used as a luxurious decoration by a combination of wood and metal.

The decorative part 500 may include stainless steel, copper, aluminum, copper, or the like. However, the present disclosure is not limited thereto, and the decorative part 500 may include all metals other than the aforementioned metals. In addition to metal, the decorative part 500 may be made of a fabric material as described above.

According to the embodiment, the decorative part 500 may represent a simple shape such as a straight line, a circle, a square, or a triangle, or a complex shape such as a specific pattern.

Meanwhile, the thickness of the decorative part 500 may be the same as or smaller than the thickness of the surface material layer 100 before sanding. If the thickness of the decorative part 500 is greater than the thickness of the surface material layer 100, when the decorative part 500 is bonded to the lower portion of the surface material layer 100, the protrusion height of the decorative part 500 increases, thereby increasing the amount of the decorative part 500 to be removed in the sanding process of the surface material layer 100. Accordingly, it may take a lot of time to remove the decorative part 500 in the sanding process, and thus taking a rather long time to complete the interior material for the vehicle according to the present embodiment.

The nonwoven layer 200 may be bonded to the bottom surface of the surface material layer 100 and the decorative part 500 to fix the surface material layer 100 to another member. Here, the decorative part 500 is positioned between the surface material layer 100 and the nonwoven layer 200.

The nonwoven layer 200 may be formed of a nonwoven layer impregnated with a dedicated adhesive. Here, the adhesive may be composed of one selected from the group consisting of polyvinyl acetate, phenol, melamine, urea, polyurethane, polyamide, ethylene vinyl acetate epoxy, polyester, polyvinyl alcohol, acrylonitrile butadiene rubber, styrene butadiene rubber, alkyd, acetylcellulose, and nitrocellulose.

The nonwoven layer 200 may be formed from one or more compositions selected from the group consisting of glass fiber, carbon fiber, polyester fiber, polyamide fiber, polyurethane fiber, acrylic fiber, polyolefin fiber, polyethylene terephthalate fiber, cellulose fiber and pulp.

According to the embodiment, the nonwoven layer 200 bonded to the surface material layer 100 is described as one sheet. However, the present disclosure is not necessarily limited thereto, and two or more nonwoven layers 200 may be bonded to the surface material layer 100 as necessary. When two or more nonwoven layers 200 are bonded to the surface material layer 100, two or more nonwoven layers 200 are continuously attached to the lower surface of the surface material layer 100. For example, the surface material layer 100, the decorative part 500, the nonwoven layer 200, and the nonwoven layer 200 may be attached in this order.

Before bonding the surface material layer 100 and the nonwoven layer 200 to each other, the surface material layer 100 and the nonwoven layer 200 are cut in advance to the same size or similar size. The surface material layer 100 and the nonwoven layer 200 of the same or similar size are put into the flat plate press 10 to bond the surface material layer 100 and the nonwoven layer 200 to each other.

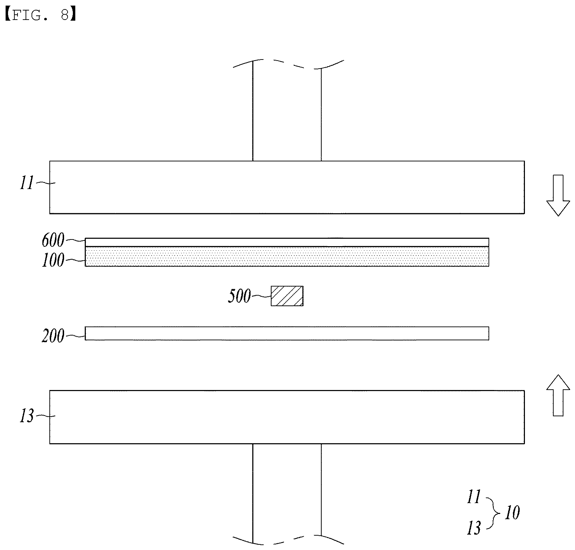

Referring to FIG. 8, bonding S200 the surface material layer 100, the decorative part 500, and the nonwoven layer 200 to each other may be carried out with the flat plate press 10 having flat contact surfaces. That is, the flat plate press 10 may have flat surfaces in contact with he surface material layer 100 and the nonwoven layer 200. However, the surface of the surface material layer 100 may be formed to have a convex surface at the portion where the decorative part 500 is located due to the decorative part 500 located below the surface material layer 100.

The flat plate press 10 is composed of an upper flat plate press 11 and a lower flat plate press 13 facing each other, and the pressure surfaces of the upper flat plate press 11 and the lower flat plate press 13 may be formed in a flat plate shape. Here, the pressure surfaces indicate surfaces in which the surface material layer 100 and the nonwoven layer 200 to be bonded to each other come into contact.

The surface material layer 100 and the nonwoven layer 200 are arranged side by side between the upper flat plate press 11 and the lower flat plate press 13. At this time, the decorative part 500 is positioned between the surface material layer 100 and the nonwoven layer 200.

Thereafter, as the upper flat plate press 11 and the lower flat plate press 13 move toward each other, the surface material layer 100, the decorative part 500 and the nonwoven layer 200 are compressed to bond together. In this embodiment, it is described that both the upper flat plate press 11 and the lower flat plate press 13 move, but it is not necessarily limited thereto and only one of the upper flat plate press 11 and the lower flat plate press 13 is not may move. For example, while the upper flat plate press 11 moves toward the lower flat plate press 13, the surface material layer 100 and the nonwoven layer 200 may be bonded to each other.

According to the embodiment, a protective member 600 may be attached to the surface of the surface material layer 100 before bonding the surface material layer 100, the decorative part 500, and the nonwoven layer 200 with the flat plate press 10. The protective member 600 may prevent the surface of the surface material layer 100 from being damaged by the flat plate press 10. When the surface material layer 100 and the nonwoven layer 200 are attached to each other by the flat plate press 10, the protective member 600 may be removed from the surface of the surface material layer 100.

In FIG. 8, the protective member 600 is described as being attached only to the surface of the surface material layer 100, but the present disclosure is not limited thereto, and the protective member 600 may also be attached to the surface of the nonwoven layer 200.

Here, the protective member 600 may be a silicone pad or a paper board. The silicone pad may be a plate having a constant thickness made of a silicone material. The paper board includes all thick paper, in particular, cardboard may be applied.

According to the embodiment, the protective member 600 may have a larger area than the surface material layer 100 in order to prevent the surface material layer 100 from being damaged by the flat plate press 10. In other words, the protective member 600 may have an area capable of covering the entire surface of the surface material layer 100. Accordingly, when the flat plate press 10 presses the surface material layer 100 and the nonwoven layer 200, the protective member 600 having a larger area than the surface material layer 100 is applied in order to prevent the upper flat plate press 11 or the lower flat plate press 13 from directly contacting the surface material layer 100 and the nonwoven layer 200.

When the flat plate press 10 bonds the surface material layer 100 and the nonwoven layer 200 to each other, the upper flat plate press 11 and the lower flat plate press 13 respectively pressurize the surface material layer 100 and the nonwoven layer 200 at a predetermined pressure for a certain period of time.

As such, when bonding of the surface material layer 100 and the nonwoven layer 200 by the flat plate press 10 is completed, the surface material layer 100 and the nonwoven layer 200 are closely fixed to each other while the decorative part 500 is positioned between the surface material layer 100 and the nonwoven layer 200. In addition, the surface material layer 100 and the nonwoven layer 200 may be formed in a flat plate shape.

In the embodiment, when the surface material layer 100 and the nonwoven layer 200 are flatly bonded by the flat plate press 10, it is easy to sand the surface of the surface material layer 100 to a constant thickness with a sander 30 to be described later. A detailed description thereof will be provided later.

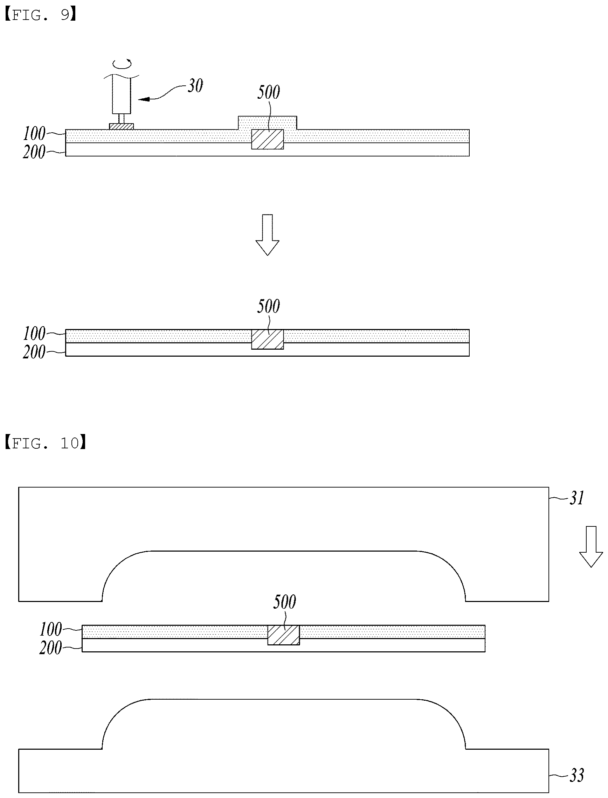

Referring to FIG. 9, after the surface material layer 100 and the nonwoven layer 200 are bonded with the decorative part 500 interposed therebetween, a process of sanding the surface of the surface material layer 100 may be performed. In this embodiment, the surface of the surface material layer 100 is sanded using the sander 30. Here, the sanding process refers to a process of finely grinding the surface of the surface material layer 100. However, the sanding process of the surface material layer 100 is not limited only to the sander 30, and various tools capable of processing the surface of the wood may be applied.

According to the embodiment, after the sanding process S300, the thickness of the surface material layer 100 may be reduced to approximately 40 to 90% of the thickness of the surface material layer 100 before sanding. For example, after the surface material layer 100 and the nonwoven layer 200 are bonded by the flat plate press 10, the thickness of the surface material layer 100 may be usually 0.4 to 0.6 mm, but when the thickness of the surface material layer 100 is 0.6 mm, after the sanding process, the thickness of the surface material layer 100 may be 0.24 to 0.54 mm.

In general, the thicker the surface material layer 100 is, more frequently deformation such as shrinkage or expansion of the surface material layer 100 occurs when the surface material layer 100 is molded by molding presses 31 and 33 or an injection material is bonded to the surface material layer 100 by injection molding. The deformation is caused by, for example, moisture in the surface material layer 100.

Therefore, as in this embodiment, if the surface material layer 100 is sanded to a certain thickness after the sanding process S300 and before the molding S400, it is possible to prevent the surface material layer 100 from being deformed during the forming or injection process.

In the embodiment, as the sander 30 moves the surface of the bonded surface material layer 100, the thickness of the surface material layer 100 is evenly reduced. By the sanding operation of the sander 30, the surface material layer 100 may be reduced to a certain thickness.

When the surface of the surface material layer 100 is sanded by the sander 30, the thickness of the surface material layer 100 decreases and the decorative part 500 located under the surface material layer 100 is exposed. When this sanding process S300 is completed, the decorative part 500 is exposed in a state where the surface of the surface material layer 100 is flat. That is, as shown in FIG. 17, the unique pattern of the decorative part 500 is exposed as it is on the surface of the flat surface material layer 100.

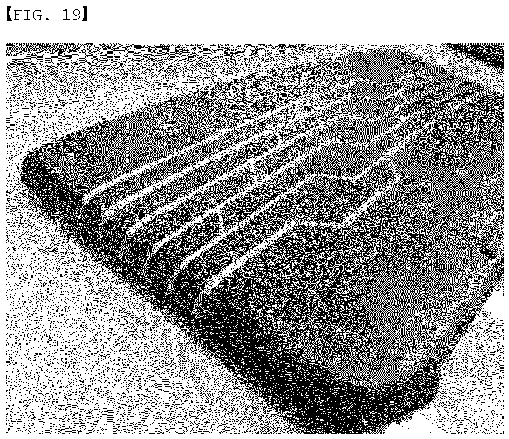

Referring to FIG. 10, when the sanding operation S300 of the surface material layer 100 is completed, the surface material layer 100 to which the decorative part 500 is exposed is molded into a predetermined shape using the molding presses 31 and 33. Specifically, by disposing the surface material layer 100 and the nonwoven layer 200 between the upper molding press 31 of the intaglio form and the lower molding press 33 of the embossed form, the bonded surface material layer 100 and the nonwoven layer 200 may be molded into a predetermined shape (see FIG. 19).

The upper molding press 31 and the lower molding press 33 pressurize the surface material layer 100 and the nonwoven layer 200 positioned therebetween at a constant pressure and temperature to form the surface material layer 100 and the nonwoven layer 200 into a predetermined shape.

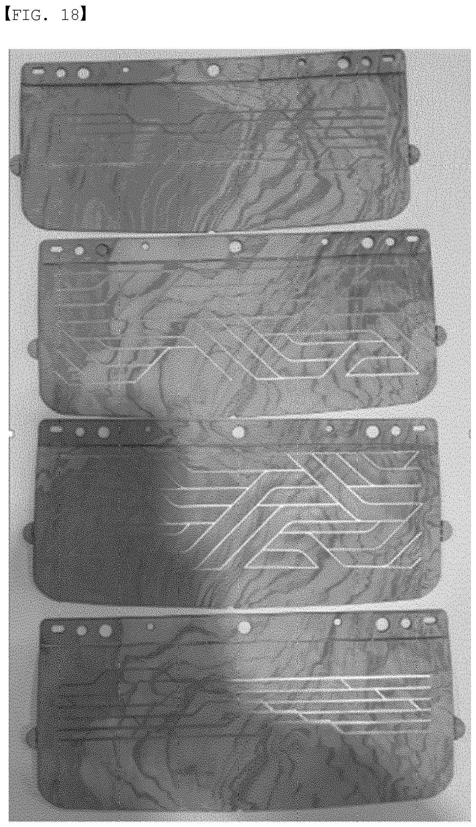

In the embodiment, the surface material layer 100 and the nonwoven layer 200 are molded by directly inserting the surface material layer 100 to which the decorative part 500 is exposed into the molding presses 31 and 33. However, before the surface material layer 100 and the nonwoven layer 200 are put into the molding presses 31 and 33, the surface material layer 100 and the nonwoven layer 200 may be cut to a predetermined size (see FIG. 18). At this time, in order to cut the surface material layer 100 and the nonwoven layer 200, various cutters such as a laser may be used.

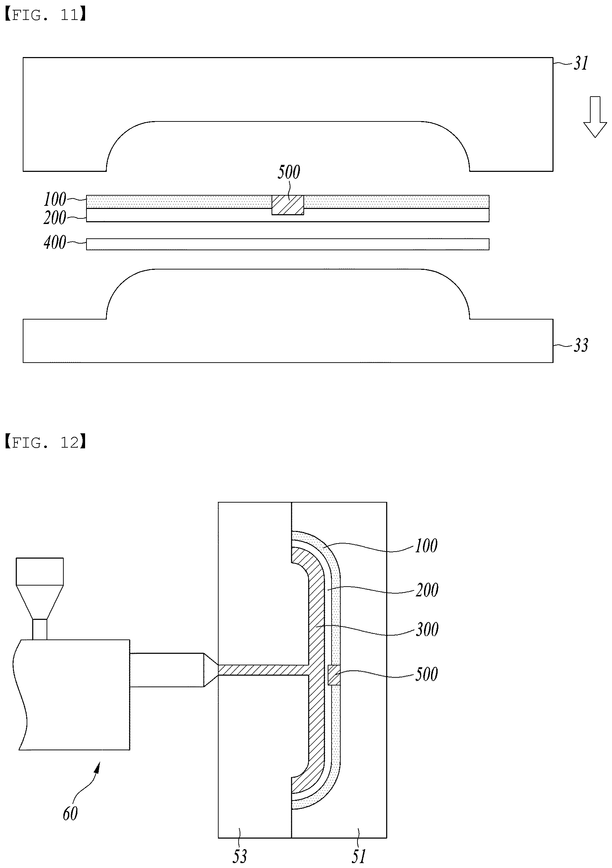

Referring to FIG. 11, when molding the bonded surface material layer 100 and the nonwoven layer 200 by the molding presses 31 and 33, by positioning an additional nonwoven layer 400 under the nonwoven layer 200, the surface material layer 100, the decorative part 500, the nonwoven layer 200, and the additional nonwoven layer 400 may be laminated in this order and molded.

Here, the additional nonwoven layer 400 is a nonwoven layer impregnated with a dedicated adhesive, and may be made of the same material as the nonwoven layer 200 directly bonded to the surface material layer 100. Therefore, a detailed description of the additional nonwoven layer 400 will be omitted.

Referring to FIG. 12, when the molding S400 is completed, injecting an injection material into the lower portion of the molded surface material layer 100 and the nonwoven layer 200 may be performed. In the injecting, after putting the surface material layer 100 and the nonwoven layer 200 molded into a predetermined shape into injection molds 51 and 53, the injection material is injected into the rear surface of the surface material layer 100 and the nonwoven layer 200 through an injection material feeder 60.

As a result, while the injection material injected into the rear surface of the nonwoven layer 200 is cured, a support part 300 may be formed on the rear surface of the surface material layer 100 and the nonwoven layer 200. The support part 300 fixes the surface material layer 100 to a specific object while supporting the surface material layer 100 and the nonwoven layer 200. For example, the support part 300 may easily fix the surface material layer 100 to the inside of a vehicle.

Thereafter, trimming for removing unnecessary injection material may be further performed after the injecting.

Referring to FIG. 13, when the injecting is completed, painting may be performed on the surface of the surface material layer 100 so that the surface material layer 100 may exhibit a specific color. The painting may be performed by applying a stain capable of displaying a specific color on the surface of the surface material layer 100. At this time, the method of applying the stain to the surface of the surface material layer 100 may be to spray the stain with a spray to apply the stain to the surface material layer 100, to apply liquid stain on a sponge or the like to the surface material layer 100, or to rub solid stain onto the surface of the surface material layer 100.

Hereinafter, another method of manufacturing an interior material for a vehicle according to the first embodiment of the present disclosure shown in FIG. 1 will be described with reference to FIGS. 14 to 16.

FIGS. 14 to 16 are views for explaining another process of manufacturing the interior material for a vehicle according to the first embodiment of the present disclosure.

Referring to FIGS. 14 to 16, according to the embodiment, in the injecting step of forming the support part 300 under the surface material layer 100 and the nonwoven layer 200, a groove in which the decorative part 500 will be located may be formed in the surface material layer 100. Then, after the injecting step is completed, the decorative part 500 may be inserted and fixed into the groove formed on the surface of the surface material layer 100.

In the manufacturing method of the interior material for a vehicle shown in the above-mentioned FIGS. 5 to 12, before performing the injecting step of injecting the injection material, the decorative part 500 is inserted and fixed in the surface material layer 100. That is, before the injecting step, the decorative part 500 is inserted and fixed in the surface material layer 100 by a separate process.

However, in this embodiment, without inserting the decorative part 500 on the surface of the surface material layer 100 before the injecting step, the groove into which the decorative part 500 will be inserted and fixed may be simultaneously formed in the surface material layer 100 in the injecting step.

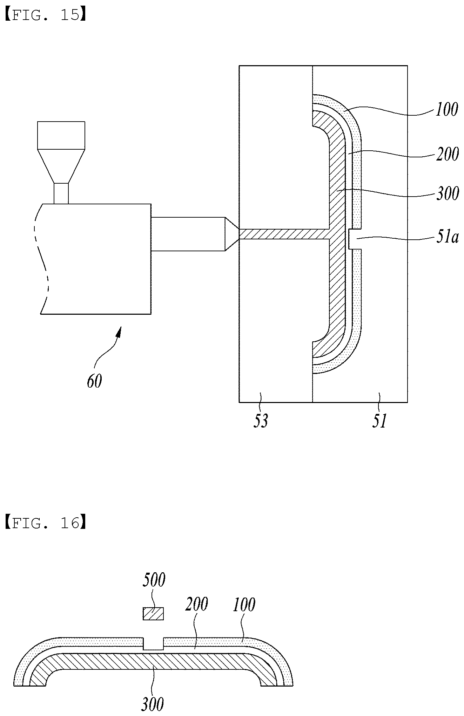

According to this embodiment, as shown in FIG. 15, the surface of the surface material layer 100 is brought into close contact with an upper injection mold 51 by the pressure of the injection material injected through the injection material feeder 60. At this time, the groove may be formed on the surface of the surface material layer 100 by a protrusion 51a formed on the upper injection mold 51. That is, the support part 300 is formed under the surface material layer 100 and the nonwoven layer 200 by the injection material, and at the same time, the groove in which the decorative part 500 is located may be formed on the surface of the surface material layer 100.

Thereafter, as shown in FIG. 16, the decorative part 500 is inserted into the groove formed on the surface of the surface material layer 100. Then, by sanding the decorative part 500 that protrudes higher than the surface of the surface material layer 100 through the sanding process, the surface material layer 100 and the decorative part 500 are processed to have the same height so that the surface of the interior material for a vehicle may be formed flat.

According to the manufacturing method of the interior material for a vehicle of the present embodiment, before molding into a predetermined shape by a press or the like, by sanding the surface material layer 100 immediately after bonding the surface material layer 100 and the nonwoven layer 200, it is possible to prevent the surface material layer 100 from being deformed during the molding process. In addition, the decorative part 500 is exposed in a specific pattern on the surface of the surface material layer 100, so that the decorative part 50 may be used as a luxurious decoration by a combination of wood and metal.

In the above, an embodiment of the present disclosure has been described, however, those of ordinary skill in the art will be able to variously modify and change the present disclosure by supplementing, changing, deleting, or adding components within the scope that does not depart from the spirit of the present disclosure described in the claims, and this will also be included within the scope of the present disclosure.

## Claims

1. An interior material for a vehicle, comprising:
a real material layer; and
a decorative part inserted into the real material layer to expose a part thereof through a surface of the real material layer,
wherein the real material layer includes one selected from a surface material layer, a nonwoven layer, and a combination thereof.

2. The interior material for a vehicle of claim 1, wherein the real material layer further includes a decorative material sheet at a bottom thereof.

3. The interior material for a vehicle of claim 1, wherein the surface material layer is a veneer sheet or a carbon sheet.

4. The interior material for a vehicle of claim 1, wherein the nonwoven layer includes any one selected from a nonwoven sheet, a glue sheet, and a combination thereof.

5. The interior material for a vehicle of claim 1, wherein the decorative part includes at least one selected from aluminum, copper, stainless steel, steel, and fabric materials.

6. The interior material for a vehicle of claim 1, wherein a thickness of the interior material for a vehicle is 0.6 to 2.2 mm.

7. A method for manufacturing an interior material for a vehicle, the method comprising:
providing a surface material layer, a decorative part, and a nonwoven layer;
bonding the nonwoven layer, the decorative part, and the surface material layer in order by a flat plate press;
sanding the surface material layer so that at least a portion of the decorative part is exposed; and
molding the sanded nonwoven layer, the decorative part, and the surface material layer into a predetermined shape.

8. The method for manufacturing an interior material for a vehicle of claim 7, wherein in the bonding, a protective member is disposed on at least one of an outer surface of the surface material layer and the outer surface of the nonwoven layer.

9. The method for manufacturing an interior material for a vehicle of claim 7, wherein the protective member is a silicone pad or a paper board.

10. The method for manufacturing an interior material for a vehicle of claim 7, wherein the nonwoven layer is impregnated with an adhesive.

11. The method for manufacturing an interior material for a vehicle of claim 7, wherein in the sanding, a thickness of the surface material layer is reduced to 40 to 90% compared to the thickness of the surface material layer before sanding.

12. The method for manufacturing an interior material for a vehicle of claim 7, wherein after sanding the surface material layer and before the molding, the bonded surface material layer, decorative part, and nonwoven layer is cut to a predetermined size.

13. The method for manufacturing an interior material for a vehicle of claim 7, further comprising:
injection molding of a support part located under the nonwoven layer after the molding.

14. The method for manufacturing an interior material for a vehicle of claim 13, wherein in the injection molding, an adhesive-impregnated nonwoven layer is additionally attached under the nonwoven layer.

15. A method for manufacturing an interior material for a vehicle, the method comprising:
forming an inlay part by etching or raker cutting on a real material layer in which a surface material layer and a nonwoven layer are stacked in order;
inserting a decorative part into the inlay part; and
sanding a protruding portion of the decorative part.

16. The method for manufacturing an interior material for a vehicle of claim 15, wherein a thickness of the inlay part is equal to or smaller than the thickness of the real material layer.

17. A method for manufacturing an interior material for a vehicle, the method comprising:
removing an etched part except for a decorative part from a surface of a decorative material sheet by etching or laser cutting;
laminating a surface material layer on an upper surface of the decorative material sheet prior to performing compression with a press; and
exposing the decorative part by sanding the surface of the surface material layer.

18. A method for manufacturing an interior material for a vehicle, the method comprising:
laminating a decorative part on an upper surface of a real material layer prior to performing compression with a press; and
sanding the real material layer from which the decorative part protrudes.

19. The method for manufacturing an interior material for a vehicle of claim 18, wherein the real material layer includes one selected from a surface material layer, a nonwoven layer, and a combination thereof.

20. The method for manufacturing an interior material for a vehicle of any one of claims 7 to 19, wherein the surface material layer is a veneer sheet or a carbon sheet.

21. The method for manufacturing an interior material for a vehicle of any one of claims 7 to 19, wherein the decorative part includes at least one selected from aluminum, copper, stainless steel, steel, and fabric materials.
